# EUROPÄISCHE PATENTSCHRIFT

(11) **EP 1 285 889 B1**
(45) Veröffentlichungstag und Bekanntmachung des Hinweises auf die Patenterteilung: **21.02.2007**
(21) Anmeldenummer: 02017896.8
(22) Anmeldetag: 09.08.2002
(51) Int. Cl.: C03C 3/115, C03C 4/02

(54) **Optisches Farbglas, seine Verwendung und optisches Steilkantenfilter**
Optical colored glass, its use and sharp skirt optical filter
Verre coloré optique, son utilisation et filtre optique à pente raide

(30) Priorität: 22.08.2001 DE 10141104
(43) Veröffentlichungstag der Anmeldung: 26.02.2003
(73) Patentinhaber: Schott AG, 55122 Mainz (DE)
(72) Erfinder: Clasen, Rolf, Prof. Dr., 66125 Saarbrücken (DE); Gierke, Monika, 65205 Wiesbaden-Erbenheim (DE); Freund, Jochen, 55128 Mainz (DE); Ritter, Simone, Dr., 55116 Mainz (DE); Kolberg, Uwe, Dr., 55252 Mainz-Kastel (DE)
(74) Vertreter: Sawodny, Michael-Wolfgang

(56) Entgegenhaltungen:
- DATABASE WPI Section Ch, Week 199247 Derwent Publications Ltd., London, GB; Class L01, AN 1992-388488 XP002222895 & SU 1 671 625 A (GLASS RES INST), 23. August 1991 (1991-08-23)

## Beschreibung

Gegenstand der Erfindung ist ein optisches Farbglas, seine Verwendung sowie ein optisches Steilkantenfilter.

Optische Steilkantenfilter zeichnen sich durch charakteristische Transmissionseigenschaften aus. So zeigen sie im kurzwelligen Bereich eine niedrige Transmission, die über einen schmalen Spektralbereich zu hoher Transmission ansteigt und im Langwelligen hoch bleibt. Der Bereich niedriger Transmission wird als Sperrbereich bezeichnet, der Bereich hoher Transmission als Pass- oder Durchlassbereich.

Optische Steilkantenfilter werden mittels bestimmter Kenngrößen charakterisiert. So wird die Absorptionskante eines solchen Filters üblicherweise als die sogenannte Kantenwellenlänge λ_{c} angegeben. Sie entspricht der Wellenlänge, bei der der spektrale Reintransmissionsgrad zwischen Sperr- und Durchlassbereich die Hälfte des Maximalwerts beträgt.

Optische Steilkantenfilter werden üblicherweise durch Farbgläser realisiert, in denen durch kolloidale Ausscheidung von Halbleiterverbindungen beim Abkühlen der Schmelze oder durch nachträgliche Wärmebehandlung die Färbung erzeugt wird. Man spricht von sogenannten Anlaufgläsern.

Die marktüblichen Steilkantenfilter werden durch eine Dotierung der Grundgläser mit Cadmium-Halbleiter-Verbindungen oder Rohstoffen, die die genannten Verbindungen in situ bilden, hergestellt. Je nach Kantenlage werden dafür CdS, CdSe, CdTe oder auch Mischzusammensetzungen dieser Halbleiter verwendet. Aufgrund der toxischen und der krebserregenden Eigenschaften des Cadmiums und des Tellurs ist es erwünscht, auf diese Verbindungen verzichten zu können und statt dessen andere Dotierungen zu verwenden. Um gleiche oder ähnliche Absorptionseigenschaften der Gläser zu erhalten, müssen alternative Dotierungen ebenfalls aus Halbleitern oder aus Rohstoffen, die in situ Halbleiter bilden, mit direkten optischen Übergängen bestehen, denn nur durch die spezielle Bandstruktur der Halbleiter, der Energielücke zwischen Valenz- und Leitungsband, kommt es zu den scharfen Übergängen zwischen Absorptions- und Transmissionsbereich der Gläser und somit zu den Filtereigenschaften dieser Gläser.

Eine Alternative zu den CdS-, CdSe-, CdTe-Verbindungen könnte auch das I-III-VI-Halbleitersystem darstellen, wie z.B. Kupferindiumdisulfid und Kupferindiumdiselenid.

Diese seit langem bekannten Halbleiter sind bisher lediglich in der Photovoltaik von größerer praktischer Bedeutung.

In einer Reihe russischer und sowjetischer Patentanmeldungen werden für einen sehr engen Glaszusammensetzungsbereich bereits CuInS₂-dotierte Gläser beschrieben, die Anwendung als Filter finden sollen: SU 1677026A1, SU 1527199A1, RU 2073657C1, SU 1770297A1, SU 1770298A1, SU 1678786A1, SU 1678785A1, SU 1701658A1, SU 1677025, SU 1675239A1, SU 1675240A1 und SU 1787963A1. Allen diesen Gläsern ist gemeinsam, dass sie mit Anteilen von bis zu 79 Gew.-% hoch SiO₂-haltig sind. Dadurch ist es nötig, die Gläser bei den sehr hohen Temperaturen von ca. 1400 °C bis 1500 °C herzustellen, was insbesondere aufgrund des leicht flüchtigen und oxidationsempfindlichen Dotierungsmaterials nachteilig ist. Die Gläser dieser Schriften enthalten laut Synthese mit bis zu 0,99 Gew.-% CuInS₂ hohe Anteile dieser Verbindung. Die Gläser dieser Schriften sind B₂O₃-frei oder -arm. Sie besitzen keine guten chemischen Beständigkeiten.

Ein anderes Dokument, SU 1671625 A1, beschreibt ein Farbglas, welches (in Gew.-%). SiO₂ 53-76; B₂O₃ 1-10; ZnO 3-15; CaO 0,1-10; MgO 0,1-8; Na₂O 1-18; K₂O 1-11; CdO 0,15-3; CdS 0,1-5; SnO₂ 0,01-1,2; Fe₂O₃ 0,02-0,5; F und/oder Cl 0,01-0,75; N₂O₃ 0,1-7; S und/oder Se 0,05-1,25 und als Maßnahme CuO 0,001-0,08 enthält.

Es ist Aufgabe der Erfindung, optische chemisch resistente und bei niedrigen Temperaturen und damit energiegünstig herstellbare Farbgläser bereitzustellen, die Steilkantenfiltereigenschaften besitzen und zwar Absorptionskanten bis zu 1,2 µm aufweisen.

Es ist weiter Aufgabe der Erfindung, solche Steilkantenfilter bereitzustellen.

Die Aufgaben werden durch ein Glas gemäß Anspruch 1, eine Verwendung gemäß Anspruch 12 und ein Steilkantenfilter gemäß Anspruch 13 gelöst.

SiO₂ bildet mit 30 bis 75 Gew.-%, bevorzugt 40 bis 65 Gew.-%, besonders bevorzugt 40 bis 56 Gew.-%, den Hauptbestandteil der Gläser.

Die erfindungsgemäßen Gläser weisen B₂O₃-Gehalte zwischen > 4 und 17 Gew.-% auf. Dadurch wird die chemische Resistenz verbessert und bei der Herstellung über Sinterverfahren die Verarbeitbarkeit und Trocknung des Grünkörpers verbessert. Höhere Anteile als 17 Gew.-% würden sich nachteilig auf die Glasqualität auswirken. Außerdem ist die Löslichkeit von H₃BO₃ in H₂O, einem möglichen Rohstoff für das Boroxid, auf den genannten B₂O₃-Anteil beschränkt. Bevorzugt sind Gehalte zwischen 5 Gew.-% und 16 Gew.-%. Besonders bevorzugt ist ein B₂O₃-Gehalt von wenigstens 8 Gew.-%.

Der Rohstoff H₃BO₃ ist besonders dann vorteilhaft, wenn K₂O als Bestandteil des Glases über den Rohstoff KOH eingebracht wird, da so der durch KOH entstehende sehr hohe pH-Wert der Suspension bei Herstellung über Sinterverfahren gesenkt wird.

Eine wesentliche Komponente ist ZnO. Dieses Oxid liegt mit 5 bis 37 Gew.-% vor. ZnO unterstützt die homogene Nanokristallbildung des Dotiermaterials im Glas. D.h. bei der Temperung des Glases ist so ein homogenes Kristallitwachstum der Halbleiterdotierung gewährleistet. Aus diesen monodispersen Kristalliten resultiert die sehr reine und leuchtende Farbe und die scharfe Absorptionskante der Gläser. Bei niedrigeren ZnO-Gehalten als 5 Gew.-% zeigen die Gläser ein schlechtes oder gar kein Anlaufverhalten. Die genannte Obergrenze an ZnO ist sinnvoll, da Gläser, die einen höheren ZnO-Gehalt aufweisen, eine Tendenz zur Bildung von tropfenartigen Ausscheidungsbereichen und somit zur Entmischung haben. Bevorzugt ist ein ZnO-Anteil von wenigstens 5 Gew.-% besonders bevorzugt von wenigstens 9 Gew.-% und ein ZnO-Anteil von höchstens 30 Gew.-% besonders bevorzugt von höchstens 23 Gew.-%. Die Entmischungstendenz solcher "Zinksilicat-Gläser" kann durch den Einsatz des Netzwerkwandlers K₂O erniedrigt werden. Daher enthalten die Gläser, um Mikroausscheidungen von ZnOangereicherten Bereichen zu verhindern und um ihre Verarbeitungstemperatur zu reduzieren, 5 bis 35 Gew.-%, bevorzugt 15 bis 29 Gew.-% K₂O. Insbesondere bei einem ZnO-Gehalt > 5 Gew.-% ist ein K₂O-Gehalt > 5 Gew.-% und bei einem ZnO-Gehalt > 10 Gew.-% ein K₂O-Gehalt > 17 Gew.-% bevorzugt. So werden hoch transparente Gläser erhalten.

Es ist ebenfalls möglich, durch Zugabe der Hilfskristallbildner CdS und CdSe die Anlaufeigenschaften der Gläser weiter zu verbessern. Dabei sollte der Gehalt an CdS und CdSe einzeln und in der Summe 0,5 Gew.-% nicht überschreiten. Aufgrund der toxischen Eigenschaften dieser Komponenten wird vorzugsweise auf sie verzichtet, und die Cd-freien Gläsern sind bevorzugt.

Weiter enthalten die Gläser zwischen 0,01 und 10 Gew.-% F. Dies ist insbesondere dann vorteilhaft, wenn die Gläser über Sinterprozesse hergestellt werden, denn durch die F-Anteile wird ihre Sintertemperatur reduziert und wird die Festigkeit des Grünkörpers erhöht. Besonders bevorzugt sind wenigstens 0,3 Gew.-%. Ganz besonders bevorzugt sind mehr als 3 Gew.-%, da sich dann die Blasenqualität des über den Sinterprozess hergestellten Glases verbessert. Bei der Herstellung über einen Schmelzprozess wird durch das Vorhandensein von F die Schmelztemperatur herabgesetzt.

Eine hohe Festigkeit des Grünkörpers ist für seine Verarbeitung, seinen Transport und seine Handhabung von Bedeutung. Die Festigkeit des Grünkörpers wird davon bestimmt, dass sich zwischen benachbarten SiOH-Gruppen Wasserstoffbrückenbindungen ausbilden und so den Grünkörper vernetzen. Beim Vorhandensein von F bilden sich neben den Wasserstoffbrückenbindungen ebenfalls Bindungen zwischen -SiF und -SiOH aus, die stärker als die Wasserstoffbrückenbindungen zwischen -SiOH und -SiOH sind. Geringe Mengen Fluor können so die Festigkeit erhöhen. Allerdings verschlechtern sich bei zu hohen F-Gehalten (> 10 Gew.-%) die Trocknungseigenschaften des Grünkörpers. Außerdem wird der Ausdehnungskoeffizient zu hoch und die Transformationstemperatur zu niedrig. Bevorzugt sind F-Konzentrationen < 5 Gew.-%.

Als Dotiermittel zur Verleihung der Filtereigenschaften enthalten die Gläser 0,1-3 Gew.-% der ternären Halbleitersysteme M^{I} M^{III} Y^{II}₂ (mit M^{I} = Cu⁺, Ag⁺, M^{III}= In³⁺, Ga³⁺, Al³⁺, Y^{II} = S²⁻, Se²⁻, Te²⁻), bevorzugt, insbesondere dann, wenn die Herstellung über Sinterverfahren erfolgt, bis 1 Gew.-%, besonders bevorzugt 0,1 bis 0,3 Gew.-%, ganz besonders bevorzugt 0,1 bis 0,25 Gew.-%. Es ist bevorzugt, dass M^{I} M^{III} Y₂^{II} aus M^{I} = Cu⁺ u./o. Ag⁺, M^{III}= In³⁺ u./o. Ga³⁺, Y^{II} = S²⁻u./o. Se²⁻ bestehen. Ganz besonders bevorzugt sind Dotiermittel von einer oder mehreren Komponenten aus dem System CuIn(Se₁₋ₓSₓ)₂ mit x = 0 bis 1, d. h. von den Randkomponenten CuInSe₂ und CuInS₂ sowie von deren Mischverbindungen.

Durch Variationen der Anteile der jeweiligen Verbindungen kann die Absorptionskante im Bereich von 360 nm bis 1200 nm verschoben werden. Bei Gehalten zwischen 0,1 und 0,25 Gew.% Dotiermittel sind Kantenlagen zwischen 550 nm und 1060 nm erreichbar.

Die Gläser können außerdem bis zu 20 Gew.-% Na₂O, bis zu 20 Gew.-% MgO, bis zu 20 Gew.-% CaO, mit CaO + MgO bis zu 20 Gew.-%, bis zu 10 Gew.-% Al₂O₃ und bis zu 5 Gew.-% TiO₂ enthalten.

Na₂O übernimmt genau wie K₂O die Funktionen des Netzwerkwandlers und steuert hauptsächlich die physikalischen Eigenschaften wie Viskositätsfixpunkte und Ausdehnungskoeffizient. Ein höherer Na₂O-Anteil ist jedoch nicht empfehlenswert, da sich dieser ungünstig auf den Ausdehnungskoeffizient auswirkt und das Glas sehr kurz macht. Die Summe aus K₂O und Na₂O sollte 35 Gew.-% nicht überschreiten. Vorzugsweise überschreitet sie 29 Gew.-% nicht. Die anderen teureren Alkalioxide Li₂O, Rb₂O und Cs₂O sind grundsätzlich verwendbar, werden jedoch aufgrund ihres preislichen Nachteils vorzugsweise nicht eingesetzt.

MgO ist ebenfalls Netzwerkwandler und zugleich Stabilisator. MgO drängt das Entglasungsvermögen zurück. Oberhalb der angegebenen Grenze erschwert MgO die Sinterverhalten und die Läuterung.
CaO fungiert als Netzwerkwandler und erhöht die chemische Beständigkeit des Glases. CaO ist jedoch negativ für die Entglasung und sollte deshalb 20 Gew.-%, vorzugsweise 10 Gew.-% nicht übersteigen.
Die Komponente TiO₂ übernimmt in diesem Glassystem vor allem die Funktion der unterstützenden UV-Blockung. Steilkantenfilter müssen im Sperrbereich eine optische Dichte von mindestens 3 erfüllen. Diese kann durch zusätzliche UV-Absorber, wie TiO₂ unterstützt werden. Außerdem wird das Glas durch TiO₂ härter und die Säurebeständigkeit steigt. Zu viel TiO₂ vermindert jedoch die Alkalifestigkeit des Glases und der maximale Anteil an TiO₂ sollte deshalb 5 Gew.-%, nicht überschreiten.

Al₂O₃ ist sowohl Netzwerkwandler als auch Netzwerkbildner und stabilisiert das Glas mechanisch wie chemisch. Ein zu hoher Anteil führt jedoch zu einer zu starken Absenkung des Ausdehnungskoeffizienten bzw. zu zu hohen Schmelztemperaturen. Vorzugsweise werden nicht mehr als 5 Gew.-% Al₂O₃ verwendet.

Weiter können die Gläser zur Feinabstimmung von Ausdehnungskoeffizient, Transformationstemperatur und Verarbeitungstemperatur bis zu < 10 Gew.-% SrO und bis zu < 10 Gew.-% BaO enthalten. SrO und BaO ähneln in vielen Wirkungen MgO und CaO, sind aber teurer. Sie werden daher nur eingeschränkt verwendet. Besonders bevorzugt sind Anteile jeweils zwischen 0 und < 5 Gew.-%.

Es ist jedoch darauf zu achten, dass bei Verwendung von größeren Mengen an Erdalkalioxiden vorzugsweise nur wenig F verwendet werden sollte, da sich sonst Kristalle von Typ MF₂ (M = Mg, Ca, Sr, Ba) bilden. Daher ist bevorzugt, dass in Gläsern, in denen der F-Gehalt zwischen 1 und 10 Gew.-% beträgt, der Gehalt an Erdalkalioxiden (MgO + CaO + SrO + BaO) auf < 3 Gew.-%, vorzugsweise auf ≤ 1 Gew.-%, beschränkt ist oder dass die Gläser erdalkalioxidfrei sind, und dass in Gläsern, in denen der Gehalt an MgO + CaO + SrO + BaO ≥ 3 Gew.-% beträgt, der Gehalt an F auf < 1 Gew.-% beschränkt ist. Vorzugsweise ist der Gehalt an F bereits bei Gläsern, in denen der Erdalkalioxidgehalt > 1 Gew.-% ist, auf < 1 Gew.-% beschränkt. Die Gläser können übliche Läutermittel in üblichen Mengen enthalten. Weiter können die Gläser bis zu 10 Gew.-% P₂O₅, bis zu 5 Gew.-% CeO₂, bis zu 5 Gew.-% ZrO₂, bis zu 5 Gew.-% Nb₂O₅, bis zu 5 Gew.-% La₂O₃ und bis zu 5 Gew.-% Ta₂O₅ enthalten.

Die Gläser können übliche Läutermittel in üblichen Mengen enthalten.

Als Läutermittel werden alle die Komponenten verstanden, die im Temperaturbereich, vorgegeben durch das Verfahren, durch Redoxreaktionen gase abgeben oder verdampfen. Bevorzugt werden Läutermittel, die neben der Läuterwirkung einen positiven Einfluss auf die Farbgebung als Folge des Eingriffs in den Redoxprozess haben. Redoxhilfsmittel sind z. B. As₂O₃, Sb₂O₃, As₂S₃ und Sb₂S₃.

Die Gläser können mit Hilfe der für die bekannten Anlaufgläser üblichen Schmelzverfahren, d. h. unter neutralen bzw. reduzierenden Bedingungen bei Temperaturen von ca. 1100-1500°C erschmolzen werden. Die Gläser bilden bereits während des Kühlungsprozesses bzw. durch eine nachträgliche Temperaturbehandlung feinverteilte Nanokristallite aus, die die Farbe bzw. das Anlaufen des Glases verursachen.

Vorteilhafterweise können die Gläser auch mit Hilfe eines Sinterprozesses, und zwar nach einer pulvertechnologischen Methode hergestellt werden:
Dabei wird zunächst ein Grünkörper umfassend pulverförmiges SiO₂ oder SiO₂-Suspension hergestellt, der gesintert werden kann. Zur Temperaturreduzierung des Sinterprozesses und zur Abstimmung der Glaseigenschaften werden neben dem pulverförmigen SiO₂ oder SiO₂-Suspension weitere Zusätze verwendet, wobei jedoch keine alkoholischen Lösungsmittel erforderlich sind. Damit der Grünkörper gut gesintert werden kann, sollten lösliche Rohstoffe oder Rohstoffe mit einem Teilchendurchmesser von vorzugsweise < 0,5 µm, besonders bevorzugt < 100 nm (=nanoskalig) verwendet werden.

Als Rohstoffe für die Zusätze werden Borsäure, Zinkoxid, Kaliumcarbonat, Kalilauge und andere Verbindungen, die Netzwerkbildner- und wandler besitzen, verwendet. Die Zusätze können aber auch jede andere Art von Carbonaten, Laugen oder Basen, wie z. B. Natronlauge oder Kaliumhydrogenfluorid sein. Des weiteren können Dispergierhilfen wie Ammoniumfluorid, weitere Laugen und Säuren wie z. B. Schwefelsäure oder Phosphorsäure zugegeben werden. Da diese Chemikalien standardmäßig auch in analytischer Reinheit angeboten werden, können mit Hilfe dieses Verfahrens hochreine Gläser erhalten werden, wobei der Grad der Reinheit der Gläser von den Verunreinigungen der zusätzlichen Glaskomponenten abhängt.

Der Grünkörper wird durch Dispergieren und Lösen der Ausgangsmaterialien in Wasser, optional auch einem alkoholischen Lösungsmittel wie beispielsweise Ethanol, hergestellt.

Dabei wird zusammen mit den Ausgangsmaterialien die wenigsten eine Dotiersubstanz dispergiert.

Vorteilhafterweise erfolgt das Lösen und Dispergieren der Ausgangsmaterialien intensive Dotierstoffe zum Herstellen eines Grünkörpers derart, dass sich eine gießfähige oder streichfähige oder extrudierbare Suspension ergibt. Nach der Verfestigung der Suspension bei Raumtemperatur oder Temperaturen bis vorzugsweise 100°C, wird der Grünkörper bei Raumtemperatur oder bei Temperaturen bis zu 400 °C getrocknet. Der getrocknete Grünkörper wird schließlich bei Temperaturen zwischen 600 °C und 1100 °C, je nach Glaszusammensetzung, gesintert oder geschmolzen. Optional kann der Grünkörper zur Verbesserung der Homogenität und der letztendlichen Qualität des resultierenden Glases nochmals gemahlen werde oder gemahlen, anschließend dispergiert und getrocknet werden.

Als Ausgangsmaterialien werden in den vorliegenden Ausführungsbeispielen KOH, H₃BO₃, ZnO, KHF₂, SiO₂ und als Dotiermäterial CuInSe₂ bzw. CuInS₂ verwandt.

Die Ausgangsmaterialien KOH, H₃BO₃, ZnO, KHF₂, CuInSe₂ bzw. CuInS₂ sowie SiO₂ werden in Wasser unter Rühren gelöst bzw. dispergiert. Optional kann das Einrühren der Rohstoffe auch unter Zuhilfenahme von Ultraschall erfolgen oder auch durch den Zusatz von Additiven zur Suspension, um das Dispergieren und Lösen der verschiedenen Rohstoffe zu erleichtern.

Die fertige Suspension wird in eine Form gegossen, in der sie sich verfestigt und 1 bis 96 Stunden an Luft getrocknet. Sie kann auch in die Form gestrichen oder extrudiert werden. Nach dem Entformen wird der Grünkörper weitere 1 bis 96 Stunden bei Raumtemperatur und anschließend 1 bis 48 Stunden bei 40 bis 400 °C getrocknet.

Die Sinterung zum Glas geschieht bei Temperaturen zwischen 600 und 1200 °C, je nach Glaszusammensetzung. Die Haltezeiten betragen hier i.a. zwischen 10 min und 5 h. Der nachträgliche Anlaufprozess zur Bildung der Halbleiter-Kristallite wird bei 400 bis 700 °C durchgeführt wobei Haltezeiten zwischen 5 und 500 h, vorzugsweise zwischen 5 und 100 h, verwendet werden.

Die nach dem zweistufigen Verfahren mit Hilfe eines Sinterprozesses hergestellten Gläser können so bei Temperaturen hergestellt werden, die ca. 200 bis 700 °C unter der Herstellungstemperatur der Gläser bei einem reinen Schmelzverfahren liegen. Dies bedeutet eine Energieeinsparung beim Herstellungsprozess, eine deutlich geringere Emission des flüchtigen und teuren Dotiermaterials und einen geringeren chemischen Angriff der Schmelzaggregate. Durch die Sinterbarkeit der Grünkörper bei dem zweistufigen Verfahren kann der Formgebungsprozess des fertigen Glasprodukts bei Raumtemperatur durchgeführt werden und kann nah am Endmaß gefertigt werden, wodurch die Verluste bei der Nachbearbeitung, z. B. beim Sägen, Schleifen und Polieren, deutlich reduziert werden.
Nicht nur wegen der Reduzierung der Abfallmenge bei der Kaltnachverarbeitung und der Energieeinsparung durch Sintern bei niedrigen Temperaturen, sondern vor allem durch die Herstellung des Glases auf der Basis von z.B. Wasser und vorzugsweise ohne toxische Komponenten, wie Cd, zeichnet sich das Glas und das Verfahren als besonders umweltfreundlich aus. Außerdem ist aufgrund der Verwendung von Standardchemikalien das erhaltene Glas kostengünstig gegenüber dem über eine Schmelzroute hergestellten Glas.

Um die Glasqualität, insbesondere im Hinblick auf Minimierung der Blasenzahl, zu verbessern, kann es von Vorteil sein, die Gläser nicht nur bis zu ihrer Sintertemperatur zu erhitzen, sondern die Temperatur noch etwas zu erhöhen. Dadurch erniedrigt sich die Viskosität der Gläser, und noch vorhandene Blasen können aus dem Glaskörper entweichen.

In den Tabellen A bis C ist für die Ausführungsbeispiele neben der Sintertemperatur auch die Temperatur angegeben, bei der noch im Glas enthaltene
Blasen aus dem Glas entweichen. Diese durch das Entweichen der Blasen gekennzeichnete Temperatur wird in der vorliegenden Anmeldung als "Läutertemperatur" bezeichnet. Sie ist für die genannten Ausführungsbeispiele bei CuInS₂-Dotierung und bei CuInSe₂-Dotierung identisch.

Bei beiden beschriebenen Vorgehensweisen werden die Gläser über einen Grünkörper hergestellt.

Werden die Gläser bis auf die beschriebene "Läutertemperatur" erhitzt, so ist es für das Verfahren und die Glasqualität irrelevant, ob diese "Läutertemperatur" in einem Schritt erreicht wird oder ob das Glas zuerst bei der niedrigeren Sintertemperatur glasig gesintert wird und in einem zweiten Temperaturschritt auf diese höhere Temperatur erhöht wird. Sowohl das einstufige als auch das zweistufige Verfahren werden hier als "Läuterverfahren" bezeichnet.

Wie die Temperaturwerte deutlich zeigen, liegt die "Läutertemperatur" gemäß der Definition in dieser Anmeldung für die erfindungsgemäßen Gläser stets unter der Herstellungs- und Verarbeitungstemperatur von herkömmlich produzierten Gläsern.

In Tabelle A sind die Zusammensetzungen verschiedener mit CuInS₂ dotierten Gläser, sowie ihre Sinter- bzw. Läutertemperatur angegeben. Weiter ist die Kantenwellenlänge λ_{c} (bei einer Probendicke von 3 mm) für die jeweils angegebene Anlauftemperatur [°C] und -zeit [h] angegeben.

**Tabelle A:**

| Zusammensetzungen und Sinter- bzw. Läutertemperaturen und λ_{c} von nach dem beschriebenen Sinterverfahren bzw. "Läuterverfahren" hergestellten Farbgläsern mit CuInS₂-Dotierung | | | | | | | | |
|---|---|---|---|---|---|---|---|---|
| **Gew.-%** | **A1.a** | **A1.b** | **A2.a** | **A2.b** | **A2.c** | **A3.a** | **A3.b** | **A3.c** |
| **SiO₂** | 41,21 | 41,21 | 51,21 | 51,21 | 51,21 | 45,28 | 45,28 | 45,28 |
| **KO₂** | 25,43 | 25,43 | 18,44 | 18,44 | 18,44 | 22,50 | 22,50 | 22,50 |
| **ZnO** | 16,48 | 16,48 | 16,39 | 16,39 | 16,39 | 18,11 | 18,11 | 18,11 |
| **B₂O₃** | 9,81 | 9,81 | 13,77 | 13,77 | 13,77 | 10,78 | 10,78 | 10,78 |
| **F** | 7,07 | 7,07 | 0,20 | 0,20 | 0,20 | 3,33 | 3,33 | 3,33 |
| **CuInS₂** | 0,13 | 0,15 | 0,15 | 0,20 | 0,20 | 0,23 | 0,23 | 0,23 |
| **T (Sintern) [°C]** | 700 | 700 | 900 | 900 | 900 | 850 | 850 | 850 |
| **T (Läutern) [°C]** | 950 | 950 | 1100 | 1100 | 1100 | 1050 | 1050 | 1050 |
| **λ[nm]** | 650 | 700 | 680 | 980 | 990 | 990 | 1020 | 1050 |
| **Anlauftemperatur [°C]/Anlaufzeit [h]** | 500/10 | 500/10 | 700/10 | 700/5 | 700/10 | 700/2 | 700/5 | 700/10 |

In Tabelle B sind Zusammensetzungen verschiedener mit CuInSe₂ dotierten Gläser sowie ihre Sinter bzw. Läutertemperatur angegeben. Gleiche Grundgläser sind mit denselben Ziffern wie unter A bezeichnet. Weiter ist die Kantenwellenlänge λ_{c} (bei einer Probendicke von 3 mm) für die jeweils angegebene Anlauftemperatur [°C] und ―zeit [h] angegeben.

**Tabelle B:**

| Zusammensetzungen und Sinter- bzw. Läutertemperaturen und λ_{c} von nach dem beschriebenen Sinterverfahren bzw. "Läuterverfahren" hergestellten Farbgläsern mit CuInSe₂-Dotierung | | | | | |
|---|---|---|---|---|---|
| **Gew.-%** | **B1.a** | **B1.b** | **B1.c** | **B2.a** | **B4.a** |
| SiO₂ | 41,21 | 41,21 | 41,21 | 51,21 | 48,72 |
| **K₂O** | 25,43 | 25,43 | 25,43 | 18,44 | 21,47 |
| **ZnO** | 16,48 | 16,48 | 16,48 | 16,39 | 17,40 |
| **B₂O**₃ | 9,81 | 9,81 | 9,81 | 13,77 | 6,43 |
| **F** | 7,07 | 7,07 | 7,07 | 0,20 | 5,97 |
| **CuInSe₂** | 0,10 | 0,15 | 0,21 | 0,20 | 0,23 |
| **T (Sintern) [°C]** | 700 | 700 | 700 | 900 | 800 |
| **T (Läutern) [°C]** | 950 | 950 | 950 | 1100 | 1000 |
| **λ_{c} [nm]** | 550 | 560 | n.b. | n.b. | 560 |
| **Anlauftemperatur [°C]** / **Anlaufzeit [h]** | 700/10 | 700/10 | n.b. | n.b. | keine |

In Tabelle C sind die Zusammensetzung und die Sinter- bzw. Läutertemperatur eines mit CuInS₂ und CuInSe₂ dotierten Glases angegeben. Weiter ist die Kantenwellenlänge λ_{c} (bei einer Probendicke von 3 mm) für die jeweils angegebene Anlauftemperatur [°C] und ―zeit [h] angegeben.

**Tabelle C:**

| Zusammensetzung und Sinter- bzw. Läutertemperatur und λ_{c} eines nach dem beschriebenen Sinterverfahren bzw. "Läuterverfahren" hergestellten Farbglases mit CuInS₂- und CuInSe₂-Dotierung. | |
|---|---|
| **Gew.-%** | **C4a** |
| SiO₂ | 48,72 |
| **K₂O** | 21,47 |
| **ZnO** | 17,40 |
| **B₂O**₃ | 6,43 |
| **F** | 5,97 |
| **CuInS₂** | 0,115 |
| **CuInSe₂** | 0,115 |
| **T (Sintern) [°C]** | 800 |
| **T (Läutern) [°C]** | 1000 |
| **λ_{c}[nm]** | 850 |
| **Anlauftemperatur [°C]/ Anlaufzeit [h]** | 700/10 |

Nachfolgend soll für das Ausführungsbeispiel A1b beispielhaft für alle anderen Ausführungsbeispiele der detaillierte Weg zur Herstellung des zu sinternden Grünkörpers angegeben werden. Der Grünkörper für Ausführungsbeispiel 5a wird hergestellt über eine Suspension der folgenden Stoffe in 90 I Wasser und enthält:

| **Oxid** | **Gew.-%** | **Rohstoff** | **Einwaage (kg)** |
|---|---|---|---|
| SiO₂ | 41,21 | SiO₂ | 36,70 |
| K₂O | 25,43 | KOH | 20,18 |
| B₂O₃ | 9,81 | H₃BO₃ | 15,60 |
| ZnO | 14,48 | ZnO | 14,68 |
| F | 7,07 | KHF₂ | 12,84 |
| CuInS₂ | 0,15 | CuInS₂₋ | 0,15 |

Die verschiedenen Rohstoffe KOH, H₃BO₃, ZnO, KHF₂, CuInS₂, SiO₂ werden sukzessive in Wasser unter Rühren gelöst oder dispergiert. Dadurch entsteht eine gießfähige Suspension, die alle Komponenten des späteren gefärbten Glases enthält.

Die fertige Suspension wird in eine beliebige Form gegossen, in der sie sich verfestigt, und wird 24 h an Luft getrocknet. Nach dem Entformen wird der Grünkörper weitere 48 h bei Raumtemperatur und anschließend 24 h bei 120 °C getrocknet.

Die Sinterung zum Glas geschieht bei 700 °C und einer Haltezeit von 1 h. Der nachträgliche Anlaufprozess zur Bildung der CuInS₂-Kristallite wird bei 500 °C durchgeführt, mit einer Haltezeit von 10 h.

Die erfindungsgemäßen M^{I} M^{III} Y₂^{II}-dotierten Gläser besitzen steile Absorptionskanten bis weit in den IR-Bereich, nämlich bis 1,2 µm. Sie zeigen im Sperrbereich eine gute optische Dichte von ≥3, wobei die optische Dichte definiert ist als OD (λ) = Ig (1/τ (λ)).

Mit diesen Steilkantenfiltereigenschaften sind sie hervorragend für die Verwendung als optische Steilkantenfilter geeignet. Sie weisen hohe chemische Beständigkeiten auf. Sie sind bei niedrigen Temperaturen herstellbar. Dies insbesondere, wenn sie, wie bevorzugt, über das beschriebenen Sinter- und anschließende "Läuter"-verfahren hergestellt werden. So sind sie umweltverträglich herstellbar. In einer bevorzugten Ausführungsform, nämlich, wenn sie cadmiumfrei sind, sind sie besonders umweltverträglich.

## Patentansprüche

1. Optisches Farbglas
**gekennzeichnet durch**
eine Zusammensetzung in (Gew.-%) von
| | |
|---|---|
| SiO₂ | 30-75 |
| K₂O | 5-35 |
| B₂O₃ | >4-17 |
| ZnO | 5-37 |
| F | 0,01-10 |
| | |
| M^{I}M^{III}Y₂^{II}, wobei M^{I} = Cu⁺, Ag⁺ | 0,1-3 |
| M^{III}=In³⁺, Ga³⁺,Al³⁺Y^{II}=S²⁻, Se²⁻, Te²⁻ sein kann | |

2. Optisches Farbglas nach Anspruch 1
**gekennzeichnet durch**
eine Zusammensetzung (in Gew.-%) von
| | |
|---|---|
| SiO₂ | 30-75 |
| K₂O | 5-35 |
| TiO₂ | 0-5 |
| B₂O₃ | >4-17 |
| ZnO | 5-30 |
| F | 0,01-10 |
| M^{I}M^{III}Y₂^{II}, wobei M' = Cu⁺, Ag⁺ | 0,1-3 |
| M^{III}= In³⁺, Ga³⁺, Al³⁺Y^{II} = S²⁻, Se²⁻, Te²⁻ sein kann | |

3. Optisches Farbglas nach Anspruch 1 oder 2,
**gekennzeichnet durch**
eine Zusammensetzung (in Gew.-%) von
| | |
|---|---|
| SiO₂ | 40-65 |
| K₂O | 15-29 |
| B₂O₃ | 5-16 |
| ZnO | 9-30 |
| F | 0.01 - 10 |
| M^{I}M^{III}Y₂^{II}, wobei | 0,1-0,3 |
| M^{I} = Cu⁺, Ag⁺ | |
| M^{III}= In³⁺, Ga³⁺ | |
| Y^{II} = S²⁻, Se²⁻ sein kann | |

4. Optisches Farbglas nach wenigstens einem der Ansprüche 1 bis 3.
**gekennzeichnet durch**
eine Zusammensetzung (in Gew.-%) von
| | |
|---|---|
| SiO₂ | 40-56 |
| K₂O | 17-29 |
| B₂O₃ | 8-16 |
| ZnO | 9-23 |
| F | 0.3-10 |
| M^{I} M^{III}Y₂^{II}, wobei M^{I} = Cu⁺, Ag⁺M^{III}=In³⁺, Ga³⁺ | 0,1 - 0,25 |
| Y^{II} = S²⁻, Se²⁻ sein kann | |

5. Optisches Farbglas nach wenigstens einem der Ansprüche 1 bis 4
**dadurch gekennzeichnet,**
**dass** das optische Farbglas übliche Läutermittel in üblichen Mengen enthält

6. Optisches Farbglas nach wenigstens einem der Ansprüche 1 bis 5,
**dadurch gekennzeichnet,**
**dass** es zusätzlich enthält (in Gew.-% auf Oxidbasis):
| | |
|---|---|
| Na₂O | 0-20 |
| mit Na₂O + K₂O | ≤35 |
| MgO | 0-20 |
| CaO | 0-20 |
| mit CaO + MgO | 0-20 |
| Al₂O₃ | 0-10 |
| SrO | 0-<10 |
| BaO | 0-<10 |
| La₂O₃ | 0-5 |
| Nb₂O₅ | . 0-5 |
| Ta₂O₅ | 0-5 |
| CeO₂ | 0-5 |
| ZrO₂ | 0-5 |
| P₂O₅ | 0-10 |
sowie übliche Läutermittel in üblichen Mengen

7. Optisches Farbglas nach wenigstens einem der Ansprüche 1 bis 6,
**dadurch gekennzeichnet,**
**dass** es enthält
| | |
|---|---|
| F | 1-10 |
| und MgO + CaO + SrO + SaO | 0 - < 3 |

8. Optisches Farbglas nach Anspruch 6,
**dadurch gekennzeichnet,**
**dass** es enthält
| | |
|---|---|
| F | 0,01 - < 1 |
| und MgO + CaO + SrO + BaO | ≥ 3 |

9. Optisches Farbglas nach wenigstens einem der Ansprüche 1 bis 8,
**dadurch gekennzeichnet,**
**dass** es zwischen 0,1 und 0,25 Gew.-% Culn(Se₁₋ₓSₓ)₂ enthält

10. Optisches Farbglas nach wenigstens einem der Ansprüche 1 bis 9,
**dadurch gekennzeichnet,**
**dass** es bis zu insgesamt 0,5 Gew.-% CdS und/oder CdSe enthält.

11. Optisches Farbglas nach wenigstens einem der Ansprüche 1 bis 10 mit einer Kantenwellenlänge λ_{c} zwischen 360 nm und 1200 nm.

12. Verwendung eines Glases nach wenigstens einem der Ansprüche 1 bis 11 als optisches Steilkantenfilter.

13. Optisches Steilkantenfilter bestehend aus einem Glas nach wenigstens einem der Ansprüche 1 bis 11.

## Claims

1. Coloured optical glass, **characterised by** a composition (in wt%) of
| | |
|---|---|
| SiO₂ | 30-75 |
| K₂O | 5-35 |
| B₂O₃ | >4-17 |
| ZnO | 5-37 |
| F | 0.01-10 |
| M^{I}M^{III}Y₂^{II}, where | 0.1-3 |
| M^{I} may be Cu⁺, Ag⁺ | |
| M^{III} may be In³⁺, Ga³⁺, Al³⁺ | |
| Y^{II} may be S²⁻, Se²⁻, Te²⁻. | |

2. Coloured optical glass according to claim 1, **characterised by** a composition (in wt%) of
| | |
|---|---|
| SiO₂ | 30-75 |
| K₂O | 5-35 |
| TiO₂ | 0-5 |
| B₂O₃ | >4-17 |
| ZnO | 5-30 |
| F | 0.01-10 |
| M^{I}M^{III}Y₂^{II}, where | 0.1-3 |
| M^{I} may be Cu⁺, Ag⁺ | |
| M^{III} may be In³⁺, Ga³⁺, Al³⁺ | |
| Y^{II} may be S²⁻, Se²⁻, Te²⁻. | |

3. Coloured optical glass according to claim 1 or 2, **characterised by** a composition (in wt%) of
| | |
|---|---|
| SiO₂ | 40-65 |
| K₂O | 15-29 |
| B₂O₃ | 5-16 |
| ZnO | 9-30 |
| F | 0.01-10 |
| M^{I}M^{III}Y₂^{II}, where | 0.1-0.3 |
| M^{I} may be Cu⁺, Ag⁺ | |
| M^{III} may be In³⁺, Ga³⁺ | |
| Y^{II} may be S²⁻, Se²⁻. | |

4. Coloured optical glass according to at least one of the claims 1 to 3, **characterised by** a composition (in wt%) of
| | |
|---|---|
| SiO₂ | 40-56 |
| K₂O | 17-29 |
| B₂O₃ | 8-16 |
| ZnO | 9-23 |
| F | 0.3-10 |
| M^{I}M^{III}Y₂^{II}, where | 0.1-0.25 |
| M^{I} may be Cu⁺, Ag⁺ | |
| M^{III} may be In³⁺, Ga³⁺ | |
| Y^{II} may be S²⁻, Se²⁻. | |

5. Coloured optical glass according to at least one of the claims 1 to 4, **characterised in that** the coloured optical glass contains typical refining agents in typical quantities.

6. Coloured optical glass according to at least one of the claims 1 to 5, **characterised in that** it additionally contains (in wt% based on oxide)
| | |
|---|---|
| Na₂O | 0-20 |
| with Na₂O + K₂O | ≤35 |
| MgO | 0-20 |
| CaO | 0-20 |
| with CaO + MgO | 0-20 |
| Al₂O₃ | 0-10 |
| SrO | 0-<10 |
| BaO | 0-<10 |
| La₂O₃ | 0-5 |
| Nb₂O₅ | 0-5 |
| Ta₂O₅ | 0-5 |
| CeO₂ | 0-5 |
| ZrO₂ | 0-5 |
| P₂O₅ | 0-10 |
and typical refining agents in typical quantities.

7. Coloured optical glass according to at least one of the claims 1 to 6, **characterised in that** it contains
| | |
|---|---|
| F | 1-10 |
| and MgO + CaO + SrO + BaO | 0-<3 |

8. Coloured optical glass according to claim 6, **characterised in that** it contains
| | |
|---|---|
| F | 0.01-<1 |
| and MgO + CaO + SrO + BaO | ≥3 |

9. Coloured optical glass according to at least one of the claims 1 to 8, **characterised in that** it contains in the range of 0.1 wt% to 0.25 wt% of CuIn(Se₁₋ₓSₓ)₂.

10. Coloured optical glass according to at least one of the claims 1 to 9, **characterised in that** it contains up to a total of 0.5 wt% of CdS and/or CdSe.

11. Coloured optical glass according to at least one of the claims 1 to 10 with an edge wavelength λ_{c} in the range of 360 nm to 1200 nm.

12. Use of a glass according to at least one of the claims 1 to 11 as a steep-edged optical filter.

13. Steep-edged optical filter comprising a glass according to at least one of the claims 1 to 11.

## Revendications

1. Verre optique coloré,
**caractérisé par**
une composition (en % en poids) comprenant :
| | |
|---|---|
| SiO₂ | 30-75 |
| K₂O | 5-35 |
| B₂O₃ | > 4-17 |
| ZnO | 5-37 |
| F | 0,01-10 |
| M^{I}M^{III}Y₂^{II}, où M^{I} peut représenter Cu⁺, Ag⁺, | 0, 1-3, |
| M^{III} peut représenter In³⁺, Ga³⁺, Al³⁺, | |
| Y^{II} peut représenter S²⁻ Se²⁻, Te²⁻. | |

2. Verre optique coloré suivant la revendication 1,
**caractérisé par**
une composition (en % en poids) comprenant :
| | |
|---|---|
| SiO₂ | 30-75 |
| K₂O | 5-35 |
| TiO₂ | 0-5 |
| B₂O₃ | > 4-17 |
| ZnO | 5-30 |
| F | 0,01-10 |
| M^{I}M^{III}Y₂^{II}, où M^{I} peut représenter Cu⁺, Ag⁺, | 0,1-3, |
| M^{III} peut représenter In³⁺, Ga³⁺, Al³⁺, | |
| Y^{II} peut représenter S²⁻, Se²⁻, Te²⁻. | |

3. Verre optique coloré suivant la revendication 1 ou 2,
**caractérisé par**
une composition (en % en poids) comprenant :
| | |
|---|---|
| SiO₂ | 40-65 |
| K₂O | 15-29 |
| B₂O₃ | 5-16 |
| ZnO | 9-30 |
| F | 0,01-10 |
| M^{I}M^{III}Y₂^{II}, où | 0, 1-0, 3 |
| M^{I} peut représenter Cu⁺, Ag⁺, | |
| M^{III} peut représenter In³⁺, Ga³⁺, | |
| Y^{II} peut représenter S²⁻, Se²⁻. | |

4. Verre optique coloré suivant au moins l'une des revendications 1 à 3,
**caractérisé par**
une composition (en % en poids) comprenant :
| | |
|---|---|
| SiO₂ | 40-56 |
| K₂O | 17-29 |
| B₂O₃ | 8-16 |
| ZnO | 9-23 |
| F | 0,3-10 |
| M^{I}M^{III}Y₂^{II}, où M^{I} peut représenter Cu⁺, Ag⁺, | 0,1-0,25 |
| M^{III} peut représenter In³⁺, Ga³⁺, | |
| Y^{II} peut représenter S²⁻, Se²⁻. | |

5. Verre optique coloré suivant au moins l'une des revendications 1 à 4,
**caractérisé en ce**
**qu'**il contient des agents d'affinage usuels en quantités usuelles.

6. Verre optique coloré suivant au moins l'une des revendications 1 à 5,
**caractérisé en ce**
**qu'**il contient en outre (en % en poids sur la base des oxydes) :
| | |
|---|---|
| Na₂O | 0-20 |
| avec Na₂O + K₂O | ≤ 35 |
| MgO | 0-20 |
| CaO | 0-20 |
| avec CaO + MgO | 0-20 |
| Al₂O₃ | 0-10 |
| SrO | 0-< 10 |
| BaO | 0-< 10 |
| La₂O₃ | 0-5 |
| Nb₂O₅ | 0-5 |
| Ta₂O₅ | 0-5 |
| CeO₂ | 0-5 |
| ZrO₂ | 0-5 |
| P₂O₅ | 0-10 |
ainsi que des agents d'affinage usuels en quantités usuelles.

7. Verre optique coloré suivant au moins l'une des revendications 1 à 6,
**caractérisé en ce**
**qu'**il contient
| | |
|---|---|
| F | 1-10 |
| et MgO + CaO + SrO + BaO | 0-< 3 |

8. Verre optique coloré suivant la revendication 6,
**caractérisé en ce**
**qu'**il contient
| | |
|---|---|
| F | 0,01-< 1 |
| et MgO + CaO + SrO + BaO | ≥ 3 |

9. Verre optique coloré suivant au moins l'une des revendications 1 à 8,
**caractérisé en ce**
**qu'**il contient entre 0,1 et 0,25 % en poids de CuIn(Se₁₋ₓSₓ)₂.

10. Verre optique coloré suivant au moins l'une des revendications 1 à 9,
**caractérisé en ce**
**qu'**il contient jusqu'à, au total, 0,5 % en poids de CdS et/ou de CdSe.

11. Verre optique coloré suivant au moins l'une des revendications 1 à 10 ayant une longueur d'onde λ_{c} aux arêtes comprise entre 360 nm et 1200 nm.

12. Utilisation d'un verre suivant au moins l'une des revendications 1 à 11 comme filtre optique à front raide.

13. Filtre optique à front raide constitué d'un verre suivant au moins l'une des revendications 1 à 11.
